# FASCICULE DE BREVET EUROPEEN

(11) **EP 2 344 615 B1**
(45) Date de publication et mention de la délivrance du brevet: **02.10.2013**
(21) Numéro de dépôt: 09768172.0
(22) Date de dépôt: 10.11.2009
(51) Int. Cl.: C11C 3/04, C10L 1/02, C10L 1/19

(54) **PROCEDE DE TRANSESTERIFICATION D'HUILES HYDROXYLEES**
VERFAHREN ZUR UMESTERUNG VON HYDROXYLIERTEN ÖLEN
METHOD FOR THE TRANSESTERIFICATION OF HYDROXYLATED OILS

(30) Priorité: 10.11.2008 FR 0857611
(43) Date de publication de la demande: 20.07.2011
(73) Titulaire: Arkema France, 92700 Colombes (FR)
(72) Inventeur: DEVAUX, Jean-François, F-69510 Soucieu En Jarrest (FR); MARTINO-GAUCHI, Georges, F-69004 Lyon (FR); BALOUIN, Jean-Yves, F-26300 Chateauneuf Sur Isere (FR); IAFRATE, Patrice, F-13360 Roquevaire (FR)
(86) Numéro de dépôt international: PCT/FR2009/052164
(87) Numéro de publication internationale: WO 2010/052443

(56) Documents cités:
- GB-A- 566 324
- US-A- 5 354 878
- AGRA I B ET AL: "Two steps ethanolysis of castor oil using sulfuric acid as catalist to produce motor oil" RENEWABLE ENERGY, PERGAMON PRESS, OXFORD, GB, vol. 9, no. 1, 12 septembre 1996 (1996-09-12), pages 1025-1028, XP004048845 ISSN: 0960-1481
- OLIVEIRA DE D ET AL: "OPTIMIZATION OF ALKALINE TRANSESTERIFICATION OF SOYBEAN OIL AND CASTOR OIL FOR BIODIESEL PRODUCTION" APPLIED BIOCHEMISTRY AND BIOTECHNOLOGY, HUMANA PRESS, INC, US, vol. 121-124, 1 janvier 2005 (2005-01-01), pages 553-560, XP008063592 ISSN: 0273-2289
- HALLER A: "ALCOOLYSE DE L'HULE DE RICIN" COMPTES RENDUS HEBDOMADAIRES DES SEANCES DE L'ACADEMIE DESSCIENCES, GAUTHIER-VILLARS, PARIS, FR, 1 janvier 1907 (1907-01-01), pages 462-466, XP008001292 ISSN: 0001-4036
- MA F ET AL: "Biodiesel production: a review" BIORESOURCE TECHNOLOGY, ELSEVIER BV, GB, vol. 70, no. 1, 1 janvier 1999 (1999-01-01), pages 1-15, XP003001658 ISSN: 0960-8524
- MEHER L C ET AL: "Technical aspects of biodiesel production by transesterification-a review", RENEWABLE AND SUSTAINABLE ENERGY REVIEWS, ELSEVIERS SCIENCE, NEW YORK, NY, US, vol. 10, no. 3, 1 June 2006 (2006-06-01), pages 248-268, XP028033336, ISSN: 1364-0321, DOI: 10.1016/J.RSER.2004.09.002 [retrieved on 2006-06-01]

## Description

La présente invention porte sur un procédé de transestérification d'une huile hydroxylée, notamment d'une huile végétale hydroxylée telle que l'huile de ricin, ledit procédé étant effectué au moyen d'un alcool léger et en présence d'un catalyseur basique, et comprenant une étape de lavage au moyen d'une solution aqueuse effectuée sur le mélange réactionnel issu de la première étape de transestérification. Ce procédé permet d'obtenir une fraction riche en esters d'acides gras hydroxylés avec un taux de conversion très élevé.

L'huile de ricin est composée de triglycérides d'acides gras dont 85 à 95% sont constitués par de l'acide ricinoléique. En présence de méthanol, l'ester majoritairement obtenu par transestérification de l'huile de ricin est le ricinoléate de méthyle (ou 12-hydroxy cis 9-octadécénoate de méthyle). Ce composé est utilisé entre autres comme matière première dans la fabrication d'acide 11-amino undécanoïque, monomère constitutif du Rilsan^{®} 11, qui est un polyamide aux propriétés physiques exceptionnelles, développé par la demanderesse.

Lors de la fabrication de l'acide 11-amino undécanoïque, le ricinoléate de méthyle est amené à subir un craquage thermique en phase gazeuse. A cet effet, il doit contenir un minimum de glycérides, c'est à dire de tri-, di- et monoglycérides car ces produits sont très difficiles à vaporiser, et souvent se décomposent avant vaporisation, ce qui a pour conséquence de baisser la sélectivité du craquage. De même, le ricinoléate de méthyle doit contenir un minimum d'acide ricinoléique, lui aussi difficile à vaporiser.

Il est donc souhaitable de disposer d'un procédé qui permet d'effectuer une transestérification aussi complète que possible.

De nombreux procédés de transestérification d'huiles végétales sont connus. Pour que la réaction soit considérée comme totale, il faut utiliser de l'alcool en excès. Afin d'éviter une consommation trop importante d'alcool, la réaction de transestérification peut être réalisée en deux étapes :
- une première étape de transestérification est réalisée en présence d'alcool léger en excès et d'un catalyseur acide ou basique, puis le glycérol formé est extrait du mélange réactionnel afin de déplacer l'équilibre de la réaction vers la formation d'ester de l'alcool léger ;
- la phase organique récupérée à la fin de cette première étape est traitée à nouveau avec de l'alcool de telle sorte qu'un rendement de transestérification proche de 100% soit finalement obtenu.

Un tel procédé est par exemple décrit dans le document US 5.354.878, qui divulgue un procédé de transestérification qui permet, certes, d'obtenir une très forte conversion de l'huile végétale en esters d'acides gras, mais qui nécessite quatre étapes de transestérification avec quatre séparations du glycérol formé. Plus précisément : dans un premier réacteur 14 sous forme de colonne, on effectue une première étape de transestérification, en introduisant en haut de la colonne le mélange de réaction contenant l'huile végétale, du méthanol et NaOH, à une vitesse inférieure à celle de décantation du glycérol qui est éliminé en bas de la colonne, ensuite on transfère le mélange réactionnel dans un second réacteur 20 et on continue la transestérification selon une seconde étape sans ajout de réactifs ; on procède ensuite à un lavage à l'eau, suivi d'une troisième étape de transestérification effectuée dans un troisième réacteur 36 (avec ajout d'alcool et de catalyseur), puis on sépare le glycérol de la même manière que lors de la première réaction de transestérification, on transfère le mélange réactionnel dans un quatrième réacteur 40 où on effectue une quatrième étape de transestérification sans ajout de réactifs ; ce dernier mélange réactionnel contenant le produit de la transestérification est soumis à un lavage à l'eau puis au séchage. L'installation exigée pour la mise en oeuvre de ce procédé laborieux est complexe, induisant un surcoût de production.

Par ailleurs, alors que le procédé de transestérification décrit dans ce document fonctionne bien avec l'huile de colza ou une autre huile, par exemple avec une huile de tournesol, on a trouvé qu'il est très pénalisant de la mettre en oeuvre avec une huile végétale hydroxylée telle l'huile de ricin. En effet, sur un mélange réactionnel huile de ricin / méthanol / catalyseur basique, la vitesse de décantation du glycérol est 5 à 20 fois plus lente que sur le mélange correspondant avec une huile de colza ou de tournesol. Pour pouvoir mettre en oeuvre le procédé décrit plus haut, avec un réacteur colonne tel que le flux soit suffisamment lent pour que le glycérol se sépare du mélange réactionnel lors de la première étape de transestérification, il faudrait avoir une colonne de diamètre gigantesque.

Le document US 5.399.731 décrit un autre procédé de transestérification de triglycérides d'acides gras avec un alcool léger et en présence d'un catalyseur basique, ledit procédé comprenant une ou plusieurs étapes de transestérification ainsi qu'une étape d'addition d'eau ou d'un acide organique ou inorganique dilué, à la phase ester obtenue après la séparation de la phase glycérol. Comme indiqué en colonne 4, lignes 11 à 16, l'addition d'eau (effectuée après la deuxième ou la dernière transestérification) permet d'éliminer de la phase ester des résidus de catalyseur et autres impuretés. Ce procédé est considérablement plus simple que le précédent, ce qui permet de réduire drastiquement les coûts de production. Cependant, lorsqu'on tente de mettre en oeuvre ce procédé de transestérification avec de l'huile de ricin, que ce soit avec une seule ou plusieurs étapes de transestérification successives, on obtient une fraction ester qui contient trop de glycérides résiduels, pour convenir à une utilisation en tant que biocarburant ou comme matière première dans la fabrication de Rilsan^{®} 11.

D'autres documents décrivent des procédés de transestérification appliqués à l'huile de ricin. La conversion de l'huile en esters obtenue par ces procédés ne dépasse pas toutefois 94%.

Le document GB 566 324 décrit un procédé de transestérification de l'huile de ricin en présence de méthanol et d'un catalyseur basique. Selon l'exemple 2, ce procédé comprend une première étape de transestérification, suivie d'une étape de séparation de la phase inférieure, riche en glycérine, par décantation. Plusieurs variantes sont ensuite décrites pour le traitement de la phase supérieure riche en esters gras. Selon une première variante (exemple 2.a), la phase supérieure est lavée trois fois à l'eau, conduisant à un taux de récupération de la glycérine de 78%. Selon une deuxième variante (exemple 2.b), ladite phase supérieure est soumise à une deuxième étape de transestérification en présence de méthanol et de catalyseur basique, puis à une étape d'acidification. Après l'élimination du méthanol en excès, la phase riche en glycérine est décantée, conduisant à un taux de récupération de la glycérine de 86%. Selon une troisième variante (exemple 2.c), ladite phase supérieure est soumise à une deuxième, puis à une troisième étape de transestérification en présence d'eau, avec décantation subséquente de la glycérine. La conversion mesurée par le rendement de glycérine obtenue est de 94%.

La publication d'Agra I.B. et al. (Renewable Energy, Pergamon Press, Oxford, GB, vol. 9, no. 1, 12 septembre 1996, pages 1025-1028) décrit un procédé de transestérification de l'huile de ricin qui a lieu en deux étapes en présence de méthanol et d'acide sulfurique. Après une première étape de transestérification, le milieu de réaction est neutralisé au moyen d'une solution d'hydroxyde de sodium, et du chlorure de sodium est ajouté pour aider à la séparation de la glycérine. La phase supérieure qui en résulte est soumise à une seconde étape de transestérification, conduisant à un taux de récupération de la glycérine de seulement 82%.

La présente invention se propose de remédier aux inconvénients que présentent les procédés de transestérification sus-mentionnés. Elle vise à proposer un procédé particulièrement adapté à la transestérification des huiles hydroxylées, notamment de l'huile de ricin. Le but de la présente invention est donc de fournir un procédé de production d'esters méthyliques ou éthyliques d'huile de ricin qui permette d'atteindre une conversion très élevée en esters, tout en étant réalisé à des températures et pressions modérées, et en ne nécessitant qu'un nombre modéré d'étapes.

A cet effet, l'invention a pour objet un procédé de transestérification d'une huile hydroxylée comprenant deux étapes de transestérification successives effectuées en présence d'un alcool léger (méthanol ou éthanol) et d'un catalyseur basique dans des conditions de température, pression et rapport massique alcool/huile permettant une conversion quasi-totale de l'huile hydroxylée en esters d'acides gras.

De manière caractéristique, au mélange réactionnel issu directement de la première étape de transestérification, on ajoute une solution aqueuse pour obtenir un mélange réactionnel comprenant notamment des esters d'acides gras hydroxylés et du glycérol. Ce mélange réactionnel est soumis à une étape de séparation permettant d'obtenir une phase moins dense composée majoritairement d'esters gras et une phase plus dense composée majoritairement de glycérol, et d'eau et de savons d'acides gras. La deuxième étape de transestérification est effectuée sur la phase moins dense additionnée dudit alcool léger et dudit catalyseur basique.

Au sens de l'invention, on entend par « huile hydroxylée » toute huile, pure ou en mélange, notamment d'origine végétale, contenant majoritairement des triglycérides d'acides gras, dont la teneur totale en acides gras hydroxylés est supérieure à 50% en poids. Comme exemples d'acides gras hydroxylés on peut citer l'acide ricinoléique ou l'acide lesquérolique.

Dans le cadre de l'invention, on peut notamment utiliser : l'huile de ricin ; l'huile extraite de la lesquerrela ; des mélanges d'huiles de ricin ou de lesquerrela avec d'autres huiles végétales ; des huiles végétales hydroxylées, pures ou en mélange, provenant des plantes génétiquement modifiées.

Les esters ricinoléiques obtenus par la mise en oeuvre du procédé selon l'invention sont directement utilisables comme matière de départ dans la fabrication d'acide 11-amino undécanoïque, monomère constitutif du Rilsan^{®} 11. Le taux de conversion de l'huile hydroxylée soumise à une transestérification suivant le procédé de l'invention est très élevé, pouvant atteindre 99,5%.

D'autres caractéristiques et avantages ressortiront de la description détaillée du procédé de transestérification selon l'invention qui va suivre et des exemples de réalisation non limitatifs de l'invention.

### Description détaillée

L'invention vise un procédé de transestérification d'une huile hydroxylée dans lequel la transestérification est effectuée en présence d'un alcool léger (méthanol ou éthanol) et d'un catalyseur basique dans des conditions de température, pression et rapport massique alcool/huile permettant une conversion quasi-totale de l'huile hydroxylée en esters d'acides gras en seulement deux étapes de transestérification, ledit procédé comprenant:
a) une première étape de transestérification T1 de l'huile hydroxylée conduisant à l'obtention d'un mélange réactionnel M1;
b) une étape d'addition d'une solution aqueuse S1 pour obtenir un mélange réactionnel A comprenant notamment des esters d'acides gras hydroxylés et du glycérol;
c) une étape de séparation du mélange réactionnel A par décantation statique et/ou par décantation centrifuge, permettant d'obtenir une phase moins dense A1 composée majoritairement d'esters gras et une phase plus dense A2 composée majoritairement de glycérol, d'eau et de savons d'acides gras;
d) une deuxième étape de transestérification T2 dans laquelle la phase A1 est additionnée dudit alcool léger et dudit catalyseur basique pour conduire à un mélange réactionnel M2.

Selon une variante préférée de réalisation, l'huile hydroxylée employée dans le cadre de l'invention est l'huile de ricin, composée de triglycéride d'acides gras, dont le principal est l'acide ricinoléique. Aucune autre huile naturelle connue ne contient une proportion aussi élevée d'acides gras hydroxylés. C'est cette composition caractéristique des glycérides qui distingue l'huile de ricin de toutes autres graisses et huiles végétales et c'est elle qui lui donne ses propriétés physiques et chimiques remarquables. L'huile de ricin possède ainsi l'indice de viscosité et la densité les plus élevés entre toutes les huiles naturelles. Ces propriétés sont dues notamment aux liaisons d'hydrogène formées entre les groupes hydroxyles. Ce sont ces propriétés qui imposent à l'huile de ricin un comportement très particulier lors des réactions chimiques et qui font que les procédés de transestérification d'huiles végétales « ordinaires » connus ne puisse pas tout simplement être transposés à l'huile de ricin (N.B. par « huile ordinaire » on entend les huiles non hydroxylées extraites de plantes oléagineuses telles que le tournesol, le colza, le soja).

L'invention est appliquée de préférence sur l'huile de ricin « 1^{st} grade », qui est une huile de ricin exempte de phospholipides et contenant une faible acidité, inférieure à 2 mg KOH/g.

L'alcool léger préféré est le méthanol. Le catalyseur basique mis en oeuvre dans le procédé est choisi dans le groupe: soude aqueuse, soude alcoolique, soude solide, potasse aqueuse, potasse alcoolique, potasse solide, méthylate de sodium ou de potassium, éthylate de sodium ou de potassium, carbonate de sodium ou de potassium.

Sans prétendre être lié par la théorie, la transestérification de l'huile de ricin avec un alcool léger s'effectue selon la suite d'équilibres suivant :

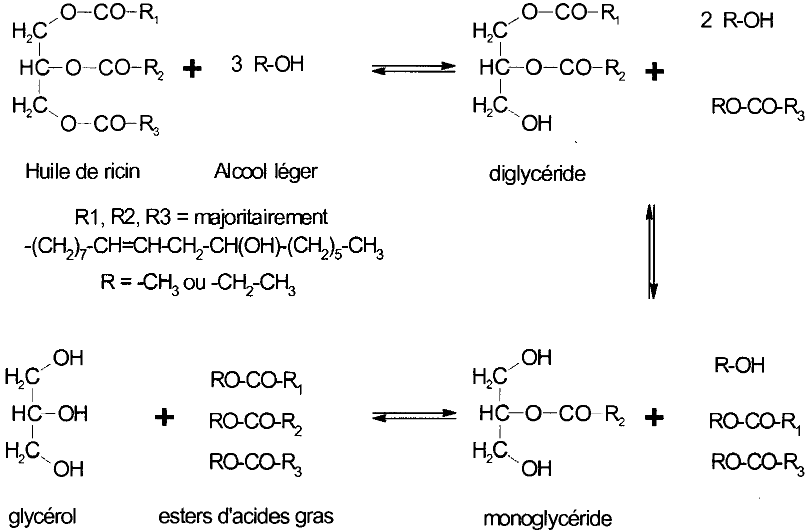

Il est connu que le milieu réactionnel de transestérification est généralement constitué de deux phases : une phase riche en ester (m)éthylique et une phase riche en glycérol. Il a maintenant été trouvé que contrairement à la plupart des esters (m)éthyliques d'acides gras, l'ester (m)éthylique d'huile de ricin solubilise beaucoup le glycérol en l'absence d'eau. Le glycérol présent dans l'ester (m)éthylique empêche d'avoir une conversion très élevée en ester (m)éthylique (elle déplace le dernier équilibre un peu vers la droite). Un lavage au moyen d'une solution aqueuse après la première étape de transestérification diminue la teneur en glycérol dans la phase riche en ester (m)éthylique, ce qui permet d'aller à conversion très élevée après une deuxième étape de transestérification. Ce résultat est inattendu, car on aurait pu craindre que le premier lavage à l'eau favorise la formation de savons qui sont gênants pour les décantations.

La masse d'alcool utilisée à l'étape T1 est de 0,1 à 0,4, et de préférence de 0,13 à 0,3, par unité de masse d'huile hydroxylée.

La masse de catalyseur utilisée à l'étape T1 est de 0,001 à 0,04, et de préférence de 0,0015 à 0,01, par unité de masse d'huile hydroxylée.

La masse de solution aqueuse S1 utilisée pour obtenir le mélange réactionnel A est de 0,01 à 0,4, et de préférence de 0,05 et 0,2, par unité de masse d'huile hydroxylée.

La décantation statique de l'étape c) peut s'effectuer dans un ou plusieurs décanteurs montés en parallèle ou en série.

La phase A1, additionnée d'alcool et de catalyseur basique, subit une deuxième étape de transestérification T2.

La masse d'alcool utilisée à l'étape T2 est de 0,05 à 0,3, et de préférence de 0,08 à 0,2, par unité de masse d'huile hydroxylée.

La masse de catalyseur utilisée à l'étape T2 est de 0,0005 à 0,03, et de préférence de 0,001 à 0,08, par unité de masse d'huile hydroxylée.

Au mélange réactionnel M2 (mélange issu de la deuxième étape de transestérification T2) on ajoute une solution aqueuse S2 pour obtenir un mélange réactionnel B. Celui-ci est ensuite soumis à une étape de séparation par décantation statique et/ou par décantation centrifuge, conduisant à l'obtention d'une phase moins dense B1 composée majoritairement d'esters gras et une phase plus dense B2 composée majoritairement de glycérol et d'eau, et, le cas échéant, de savons d'acides gras.

Selon un mode de réalisation, le procédé selon l'invention comprend en outre une étape de recyclage R d'un mélange comprenant des esters d'acides gras et/ou des acides gras libres et/ou des sels d'acides gras, additionné de catalyseur basique dans le mélange réactionnel issu de la deuxième étape de transestérification T2, effectuée avant l'ajout de la solution aqueuse S2. En général, la quantité de catalyseur basique additionné doit être suffisante pour neutraliser la totalité de l'acidité présente dans le milieu.

Les étapes T1, T2, R, de séparation et d'ajout de la solution aqueuse S1 et S2 sont opérées une pression inférieure à 5 bars absolus et de préférence à une pression inférieure à 2 bars absolus et à une température allant de 10 à 100°C, de préférence de 15 à 60°C et plus préférentiellement de 20 à 50°C.

Le procédé de transestérification peut comprendre également une étape dans laquelle la phase B1 subit une évaporation partielle ou totale de l'alcool, puis un rajout d'une solution aqueuse S3 et une séparation de phases, de façon à obtenir une phase moins dense C1 composée d'esters gras et une phase aqueuse plus dense C2 comprenant de l'alcool, du glycérol et des savons. L'étape d'évaporation de l'alcool est opérée à une température comprise entre 60 et 200°C et de préférence entre 100 et 180°C, et à une pression comprise entre 0,1 et 1,5 bar absolu. Selon un mode de réalisation, la phase aqueuse plus dense C2 récupérée est utilisée en tant que solution aqueuse S1 et/ou S2 pour obtenir le mélange réactionnel A et/ou le mélange réactionnel B.

Les solutions aqueuses S1, S2 et S3, sont constituées de préférence d'eau, mais peuvent aussi être choisies dans le groupe : solution aqueuse diluée de soude, potasse, carbonate de sodium ou potassium, d'acide dilué (acide chlorhydrique, acide sulfurique ou autre acide), ou bien flux aqueux recyclés qui contiennent des petites quantités de matières organiques et/ou de sels.

Les phases plus denses A2, B2 et optionnellement C2 décrites plus haut sont mélangées et le mélange subit un traitement comprenant des étapes d'évaporation, d'acidification et de décantation conduisant à l'obtention d'une phase huileuse moins dense D1 et d'une phase plus dense D2 composée majoritairement de glycérol et d'eau. L'étape d'évaporation a pour objet d'éliminer du mélange une partie ou la totalité du méthanol et éventuellement une partie de l'eau présente. L'acidification peut être réalisée par exemple avec de l'acide sulfurique ou de l'acide chlorhydrique. La phase huileuse moins dense D1 est composée majoritairement d'esters gras et d'acide gras.

Le procédé selon l'invention peut comprendre également une étape d'estérification dans laquelle la phase huileuse D1 est mise à réagir avec l'alcool et un catalyseur acide choisi dans le groupe : acide chlorhydrique, acide sulfurique, acide méthanesulfonique et acide para-toluènesulfonique, à une température allant de 40 à 120°C et une pression inférieure à 10 bar, pour obtenir un mélange M3 comprenant des esters d'acides gras et des acides gras libres. La masse d'alcool utilisée à l'étape d'estérification est de 0,1 à 1,5 et de préférence de 0,2 à 0,8, par unité de masse de phase huileuse D1. La masse de catalyseur acide utilisée à l'étape d'estérification est de 0,001 à 0,05, et de préférence de 0,01 à 0,03, par unité de masse d'huile hydroxylée.

Ces deux dernières étapes permettent généralement de récupérer quelques pourcentages de rendement en esters qui seraient sinon éliminés avec le glycérol sous forme d'esters ou de savons ou d'acides gras.

Selon une première variante, le mélange M3 est utilisé à l'étape de recyclage R. Selon une autre variante de réalisation, le mélange M3 est additionné d'une solution aqueuse acide, basique ou neutre, et de préférence d'eau, puis il est soumis à une séparation permettant d'obtenir une phase aqueuse plus dense E2 et une phase moins dense contenant des esters E1. Dans ce cas, c'est la phase E1 qui est utilisée à l'étape de recyclage R. La phase E2 peut être recyclée avec le mélange des phases A1 et A2.

Le procédé selon l'invention permet d'obtenir une conversion quasi-totale de l'huile à l'issue de l'étape T2. On entend par conversion quasi-totale le fait que le mélange obtenu contienne moins de 5% et de préférence moins de 2% de triglycérides, diglycérides et monoglycérides par rapport aux esters d'acides gras, soit une conversion supérieure à 95% et de préférence supérieure à 98%.

Les étapes de l'invention peuvent être mises en oeuvre en batch ou en continu, dans tous types de réacteurs connus de l'homme de l'art et abondamment décrits dans les publications et brevets concernant la transestérification d'huiles. En batch, on pourra utiliser par exemple un ou plusieurs réacteurs agités. En continu, on pourra utiliser, sans que la liste soit limitative, des réacteurs pistons, des réacteurs colonnes, des mélangeurs statiques, des réacteurs agités continus.

Le mélange d'esters gras formé par la présente invention et constituant la phase B1 ou la phase C1 peut être utilisé, éventuellement après une purification subséquente, comme biocarburant ou additif dans les carburants Diesel, ou (lorsque l'huile hydroxylée est l'huile de ricin) comme matière première pour la fabrication, par pyrolyse ou craquage, d'heptanal, qui est un précurseur d'acide heptanoïque, et d'undécylénate de méthyle qui peut être transformé en acide undécylénique. L'acide undécylénique est une matière première utilisée pour la fabrication de l'acide 11-amino undécanoïque et de Rilsan^{®} 11.

La présente invention sera mieux comprise à la lecture des exemples de réalisation suivants.

### Méthode d'analyse

Dans un flacon de 3 ml, on introduit 50 mg de mélange d'esters gras méthyliques à doser, 1 ml de diméthylformamide anhydre et 1 ml d'un mélange 99/1 de BistriméthylSilylTriFluoroAcétamide et chlorotriméthylsilane. Après avoir bouché hermétiquement le flacon, on agite vigoureusement et on chauffe à 70°C pendant 20 minutes. On injecte 1 µl du mélange sur un chromatographe gaz muni d'une colonne CPSIL 5CB (15m de longueur, 0,32 mm de diamètre, film d'épaisseur 0,25 µm) et d'un détecteur à ionisation de flamme. On note P1 l'aire des pics d'esters méthyliques, P2 l'aire des monoglycérides, P3, celle des diglycérides et P4 celle des triglycérides.

On estime la conversion en esters méthyliques par le calcul suivant : conversion = P1 / (P1+P2+P3+P4)

### Exemple 1 selon l'invention : transestérification de l'huile de ricin catalysée à la soude en batch

Dans un réacteur batch d'un litre muni d'une agitation, on réalise un mélange de 402 grammes d'huile de ricin et de 132 grammes de méthanol à 30°C sous pression atmosphérique. On ajoute sous agitation vigoureuse 3,5 grammes de solution aqueuse de soude à 30%, on laisse agiter 30 minutes à cette température, puis on ajoute 44 grammes d'eau. Après 5 minutes d'agitation, on laisse décanter pendant 2 heures. On sépare 106 grammes d'une phase inférieure A2 contenant 28% de glycérol. A la phase supérieure A1, on rajoute 47 grammes de méthanol et 2,8 grammes de solution aqueuse de soude à 30%. On agite vigoureusement 30 minutes à 30°C, puis on rajoute 92 grammes d'eau. Après 5 minutes d'agitation, on laisse décanter. On récupère 162 grammes d'une phase inférieure B2 contenant 6,4% de glycérol et 432 grammes d'une phase supérieure B1 contenant 77% de ricinoléate de méthyle, 5% de méthanol et 0,29% de glycérol. L'analyse par chromatographie gaz après silylation montre que la conversion est de 98,8%.

### Exemple 2 selon l'invention : transestérification de l'huile de ricin catalysée au méthylate de sodium en batch

Dans un réacteur batch d'un litre muni d'une agitation, on réalise un mélange de 407 grammes d'huile de ricin et de 126 grammes de méthanol à 40°C sous pression atmosphérique. On ajoute sous agitation vigoureuse 5,4 grammes de solution méthanolique de méthylate de sodium à 25%, on laisse agiter 1 heure à cette température, puis on ajoute 41 grammes d'eau. Après 5 minutes d'agitation, on laisse décanter pendant 1 heure. On sépare 98 grammes d'une phase inférieure A2 contenant du glycérol et de l'eau. A la phase supérieure A1, on rajoute 28 grammes de méthanol et 4 grammes de solution méthanolique de méthylate de sodium à 25%. On agite vigoureusement 30 minutes à 30°C, puis on rajoute 105 grammes d'eau. Après 5 minutes d'agitation, on laisse décanter. On récupère 175 grammes d'une phase plus dense B2 contenant du glycérol et de l'eau et 438 grammes d'une phase supérieure B1 contenant 77% de ricinoléate de méthyle, 7% de méthanol et 0,1% de glycérol. L'analyse par chromatographie gaz après silylation montre que la conversion est de 99,5%. Le mélange est ensuite chauffé à 140°C à l'évaporateur rotatif, afin d'évaporer le méthanol. Un lavage avec 100 g d'eau suivi d'une décantation pour éliminer la phase aqueuse C2 permet de récupérer 399 g d'un mélange d'ester méthyliques C1 contenant 85% de ricinoleate de méthyle, 4% de linoléate de méthyle, 3% d'oléate de méthyle, 1 % de stéarate de méthyle, 1 % de palmitate de méthyle.

### Exemple 3 selon l'invention : transestérification de l'huile de ricin catalysée à la soude et au méthylate de sodium en batch

On reproduit l'exemple 2, en ajoutant sur la phase A1 3,1 g de soude aqueuse à 30% à la place de la solution méthanolique de méthylate de sodium. On obtient une conversion de 99,5%.

### Exemple 4 selon l'invention : transestérification de l'huile de ricin catalysée à la soude en continu

Dans une installation fonctionnant en continu, 650 g/h d'huile de ricin, 210 g/h de méthanol et 5,5 g/h de solution aqueuse de soude à 30% sont injectés sur un mélangeur statique relié au bas d'une colonne garnie d'anneaux de Rashig de 2 cm de diamètre intérieur et 1,5 m de hauteur maintenue à 30°C par une double enveloppe. Le flux sortant du haut de la colonne est mélangé en ligne à l'aide d'un mélangeur statique avec un flux d'eau de 70 g/h puis envoyé dans une décanteuse centrifuge fonctionnant en continu qui permet d'obtenir une phase aqueuse et glycérineuse A2 plus dense (190 g/h) et une phase moins dense A1. Le flux continu de la phase moins dense A1 est mélangé en ligne via un mélangeur statique avec un débit de 75 g/h de méthanol et 4,5 g/h d'une solution aqueuse de soude à 30%, puis injecté au bas d'une colonne garnie d'anneaux de Rashig de 2 cm de diamètre intérieur et 1,5 m de hauteur maintenue à 30°C par une double enveloppe. Au flux sortant de la colonne par le haut est mélangé en ligne 40 g/h d'un flux recyclé E1 (dont la préparation est décrite plus loin), ainsi que 1,5 g/h d'une solution aqueuse de soude à 30%. Ce flux est ensuite envoyé sur un mélangeur statique où l'on injecte 160 g/h de phase aqueuse (lors d'une première expérience on utilise de l'eau, puis on utilise la phase aqueuse C2 décrite plus loin lors des expériences ultérieures). Le mélange est ensuite envoyé en continu dans un décanteur statique, qui permet de soutirer une phase plus dense B2 constituée majoritairement d'eau, de glycérol et de méthanol (300 g/h) et une phase moins dense B1 qui contient le mélange d'esters méthyliques (720 g/h). Cette phase moins dense B1 est collectée sur une durée de 2 heures (1440 g), puis passée à l'évaporateur rotatif à 130°C pour évaporer le méthanol, puis refroidie à 60°C, et mélangée avec 400 g d'eau. On laisse alors décanter pour former une phase aqueuse (C2) et une phase ester méthyliques C1 (1320 g), contenant 86% de ricinoléate de méthyle, et 8% d'ester gras méthylique en C18 (stéarate, oléate et linoléate).

Les phases aqueuses A2 et B2 sont collectées sur une durée de 2 heures (980 g). On évapore ensuite le méthanol et une partie de l'eau à l'évaporateur rotatif pour obtenir 570 g d'une solution aqueuse à 24% de glycérol. On acidifie avec 14 g d'acide chlorhydrique à 33% puis on laisse décanter. La phase la moins dense D1 (75 g), composée d'environ 60% d'esters gras méthyliques et 31% d'acides gras est séparée, mélangée avec 50 g de méthanol et 2,5 g d'HCl 33%, pour former le mélange M3, puis chauffée à 90°C pendant 2 heures. La conversion des acides gras en esters gras méthyliques est supérieure à 80%. Le mélange M3 est alors lavé avec 75 g d'eau. On obtient une phase aqueuse E2 plus dense et une phase organique E1 moins dense (80 g) contenant les esters gras méthyliques, qui est recyclée après la deuxième étape de transestérification. Ce traitement des phases aqueuses permet d'augmenter de près de 3% le rendement global du procédé de transformation de l'huile de ricin en mélange d'esters gras méthyliques.

### Exemple 5 comparatif : transestérification de l'huile de ricin catalysée à la soude sans lavage intermédiaire

Dans un réacteur batch d'un litre muni d'une agitation, on réalise un mélange de 402 grammes d'huile de ricin et de 132 grammes de méthanol à 30°C sous pression atmosphérique. On ajoute sous agitation vigoureuse 3,5 grammes de solution aqueuse de soude à 30%, on laisse agiter 30 minutes à cette température, on laisse décanter pendant 1 nuit. La décantation est très lente. On sépare 18 grammes d'une phase inférieure contenant 70% de glycérine. A la phase supérieure, on rajoute 47 grammes de méthanol et 2,8 grammes de solution aqueuse de soude à 30%. On agite vigoureusement 30 minutes à 30°C, puis on rajoute 92 grammes d'eau. Après 5 minutes d'agitation, on laisse décanter. On récupère 172 grammes d'une phase inférieure contenant 7% de glycérine et 436 grammes d'une phase supérieure contenant 74% de ricinoléate de méthyle, 7% de méthanol et 2% de glycérine. L'analyse par chromatographie gaz après silylation montre que la conversion n'est que de 94,8%.

## Revendications

1. Procédé de transestérification d'une huile hydroxylée dans lequel la transestérification est effectuée en présence de méthanol ou d'éthanol et d'un catalyseur basique dans des conditions de température, pression et rapport massique alcool/huile permettant une conversion supérieure à 95% de l'huile hydroxylée en esters d'acides gras en seulement deux étapes de transestérification, ledit procédé comprenant:
a) une première étape de transestérification T1 de l'huile hydroxylée conduisant à l'obtention d'un mélange réactionnel M1;
b) une étape d'addition d'une solution aqueuse S1 pour obtenir un mélange réactionnel A comprenant notamment des esters d'acides gras hydroxylés et du glycérol;
c) une étape de séparation du mélange réactionnel A par décantation statique et/ou par décantation centrifuge, permettant d'obtenir une phase moins dense A1 composée majoritairement d'esters gras et une phase plus dense A2 composée majoritairement de glycérol, et d'eau et de savons d'acides gras;
d) une deuxième étape de transestérification T2 dans laquelle la phase A1 est additionnée de méthanol ou d'éthanol et dudit catalyseur basique pour conduire à un mélange réactionnel M2.

2. Procédé selon la revendication 1 comprenant en outre une étape de recyclage R d'un mélange comprenant des esters d'acides gras, des acides gras libres et du catalyseur basique dans le mélange réactionnel M2 issu de la deuxième étape de transestérification T2.

3. Procédé selon l'une des revendications 1 et 2 dans lequel on ajoute une solution aqueuse S2 au mélange réactionnel M2 ou au mélange réactionnel issu de l'étape de recyclage R pour obtenir un mélange réactionnel B.

4. Procédé selon l'une quelconque des revendications 1 à 3 comprenant en outre une étape de séparation du mélange réactionnel B par décantation statique et/ou par décantation centrifuge, permettant d'obtenir une phase moins dense B1 composée majoritairement d'esters gras et une phase plus dense B2 composée majoritairement de glycérol, d'eau et, le cas échéant, de savons d'acides gras.

5. Procédé selon l'une quelconque des revendications précédentes dans lequel les étapes T1, T2, R, de séparation et d'ajout des solutions aqueuses S1 et S2 sont opérées à une pression inférieure à 5 bars et à une température allant de 10 à 100°C, de préférence de 15 à 60°C et plus préférentiellement de 20 à 50°C.

6. Procédé selon l'une des revendications 4 ou 5 dans lequel la phase B1 subit une évaporation partielle ou totale de l'alcool, puis un rajout d'une solution aqueuse et une séparation de phases, de façon à obtenir une phase moins dense C1 composée d'esters gras et une phase aqueuse plus dense C2 comprenant de l'alcool, du glycérol et des savons.

7. Procédé selon la revendication 6 dans lequel la phase aqueuse plus dense C2 récupérée est utilisée en tant que solution aqueuse S1 ou S2 pour obtenir le mélange réactionnel A ou le mélange réactionnel B.

8. Procédé selon l'une quelconque des revendications 6 et 7 dans lequel les phases plus denses A2, B2 et optionnellement C2 sont mélangées et le mélange subit un traitement comprenant des étapes d'évaporation, d'acidification et de décantation conduisant à l'obtention d'une phase huileuse moins dense D1 et d'une phase plus dense D2 composée majoritairement de glycérol et d'eau.

9. Procédé selon la revendication 8 dans lequel la phase huileuse D1 est mise à réagir avec l'alcool et un catalyseur acide choisi dans le groupe : acide chlorhydrique, acide sulfurique, acide méthanesulfonique et acide para-toluènesulfonique, à une température allant de 40 à 120°C, pour obtenir un mélange M3 comprenant des esters d'acides gras et des acides gras libres.

10. Procédé selon la revendication 9 dans lequel le mélange M3 est utilisé à l'étape de recyclage R.

11. Procédé selon la revendication 9 dans lequel le mélange M3 est additionné d'une solution aqueuse acide, basique ou neutre, et de préférence d'eau, puis il est soumis à une séparation permettant d'obtenir une phase aqueuse plus dense E2 et une phase moins dense contenant des esters E1.

12. Procédé selon la revendication 11 dans lequel la phase E1 est utilisée à l'étape de recyclage R.

13. Procédé selon l'une quelconque des revendications précédentes dans lequel le catalyseur basique est choisi dans le groupe: soude aqueuse, soude alcoolique, soude solide, potasse aqueuse, potasse alcoolique, potasse solide, méthylate de sodium ou de potassium, éthylate de sodium ou de potassium, carbonate de sodium ou de potassium.

14. Procédé selon l'une quelconque des revendications précédentes dans lequel les solutions aqueuses S1 et S2 sont choisies dans le groupe : eau, solution aqueuse diluée de soude, potasse, carbonate de sodium ou potassium, solution aqueuse d'acide dilué, flux aqueux recyclés qui contiennent des petites quantités de matières organiques et/ou de sels, et sont de préférence l'eau.

15. Procédé selon l'une quelconque des revendications précédentes dans lequel la masse d'alcool utilisée à l'étape T1 est de 0,1 à 0,4, et de préférence de 0,13 à 0,3, par unité de masse d'huile hydroxylée.

16. Procédé selon l'une quelconque des revendications précédentes dans lequel la masse de solution aqueuse S1 utilisée pour obtenir le mélange réactionnel A est de 0,01 à 0,4, et de préférence de 0,05 à 0,2, par unité de masse d'huile hydroxylée.

17. Procédé selon l'une quelconque des revendications précédentes dans lequel l'huile hydroxylée est une huile végétale hydroxylée.

18. Procédé selon la revendication 17 dans lequel l'huile végétale hydroxylée est l'huile de ricin.

19. Procédé selon la revendication 17 dans lequel l'huile végétale hydroxylée est l'huile de lesquerrela.

20. Procédé selon la revendication 17 dans lequel l'huile végétale hydroxylée a une teneur en acides gras hydroxylés supérieure à 50% en poids.

21. Procédé selon l'une quelconque des revendications précédentes dans lequel les étapes de transestérification T1 et T2 sont effectuées en présence de méthanol.

22. Procédé selon l'une des revendications 17 à 20 dans lequel la phase B1 ou C1 est utilisée, éventuellement après une purification subséquente, comme biocarburant ou additif dans les carburants Diesel.

23. Procédé selon la revendication 18 dans lequel la phase B1 ou C1 est utilisée, éventuellement après une étape de purification, comme matière première pour la fabrication d'acide 11-aminoundécanoïque.

## Patentansprüche

1. Verfahren zur Umesterung eines hydroxylierten Öls, wobei die Umesterung in Gegenwart von Methanol oder Ethanol und eines basischen Katalysators unter Bedingungen von Temperatur, Druck und einem Massenverhältnis von Alkohol/Öl durchgeführt wird, die eine Umwandlung des hydroxylierten Öls in Fettsäureester von mehr als 95 % in nur zwei Umesterungsschritten ermöglichen, wobei das Verfahren umfasst:
a) einen ersten Schritt zur Umesterung T1 des hydroxylierten Öls, der zum Erhalt eines Reaktionsgemisches M1 führt;
b) einen Schritt zur Zugabe einer wässrigen Lösung S1, um ein Reaktionsgemisch A zu erhalten, das insbesondere hydroxylierte Fettsäureester und Glycerol umfasst;
c) einen Schritt zur Trennung des Reaktionsgemischs A durch statisches Dekantieren und/oder durch Zentrifugaldekantieren, der es ermöglicht, eine weniger dichte Phase A1, die überwiegend aus Fettsäureestern besteht, und eine dichtere Phase A2, die überwiegend aus Glycerol und Wasser und Fettsäureseifen besteht, zu erhalten;
d) einen zweiten Schritt zur Umesterung T2, wobei der Phase A1 Methanol oder Ethanol und der basische Katalysator zugegeben werden, um zu einem Reaktionsgemisch M2 zu führen.

2. Verfahren nach Anspruch 1, ferner umfassend einen Schritt zum Recyceln R eines Gemischs, umfassend Fettsäureester, freie Fettsäuren und basischen Katalysator in dem Reaktionsgemisch M2, das aus dem zweiten Schritt zur Umesterung T2 stammt.

3. Verfahren nach einem der Ansprüche 1 und 2, wobei eine wässrige Lösung S2 zu dem Reaktionsgemisch M2 oder zu dem Reaktionsgemisch, das aus dem Schritt zum Recyceln R stammt, gegeben wird, um ein Reaktionsgemisch B zu erhalten.

4. Verfahren nach einem der Ansprüche 1 bis 3, ferner umfassend einen Schritt zur Trennung des Reaktionsgemischs B durch statisches Dekantieren und/oder durch Zentrifugaldekantieren, der es ermöglicht, eine weniger dichte Phase B1, die überwiegend aus Fettsäureestern besteht, und eine dichtere Phase B2, die überwiegend aus Glycerol, Wasser und gegebenenfalls Fettsäureseifen besteht, zu erhalten.

5. Verfahren nach einem der vorhergehenden Ansprüche, wobei die Schritte T1, T2, R zur Trennung und zur Zugabe der wässerigen Lösungen S1 und S2 bei einem Druck unterhalb von 5 bar und bei einer Temperatur zwischen 10 und 100 °C, bevorzugt 15 bis 60 °C und stärker bevorzugt 20 bis 50 °C ausgeführt werden.

6. Verfahren nach einem der Ansprüche 4 oder 5, wobei die Phase B1 einer teilweisen oder vollständigen Verdampfung des Alkohols, dann einer Zugabe einer wässrigen Lösung und einer Phasentrennung unterzogen wird, um eine weniger dichte Phase C1, die aus Fettsäureestern besteht, und eine dichtere wässrige Phase C2, die Alkohol, Glycerol und Seifen umfasst, zu erhalten.

7. Verfahren nach Anspruch 6, wobei die zurückgewonnene, dichtere wässrige Phase C2 als wässrige Lösung S1 oder S2 verwendet wird, um das Reaktionsgemisch A oder das Reaktionsgemisch B zu erhalten.

8. Verfahren nach einem der Ansprüche 6 und 7, wobei die dichteren Phasen A2, B2 und wahlweise C2 gemischt werden und das Gemisch einer Behandlung unterzogen wird, umfassend die Schritte zum Verdampfen, Ansäuern und Dekantieren, die zum Erhalt einer weniger dichten öligen Phase D1 und zu einer dichteren Phase D2, die überwiegend aus Glycerol und Wasser besteht, führen.

9. Verfahren nach Anspruch 8, wobei die ölige Phase D1 mit dem Alkohol und einem sauren Katalysator, ausgewählt aus der Gruppe: Chlorwasserstoffsäure, Schwefelsäure, Methansulfonsäure und para-Toluensulfonsäure, bei einer Temperatur zwischen 40 und 120 °C umgesetzt wird, um ein Gemisch M3, umfassend Fettsäureester und freie Fettsäuren, zu erhalten.

10. Verfahren nach Anspruch 9, wobei das Gemisch M3 im Schritt zum Recyceln R verwendet wird.

11. Verfahren nach Anspruch 9, wobei zu dem Gemisch M3 eine saure, basische oder neutrale wässrige Lösung und bevorzugt Wasser gegeben wird, es dann einer Trennung unterzogen wird, die es ermöglicht, eine dichtere wässrige Phase E2 und eine weiniger dichte Phase E1, die Ester enthält, zu erhalten.

12. Verfahren nach Anspruch 11, wobei die Phase E1 im Schritt zum Recyceln R verwendet wird.

13. Verfahren nach einem der vorhergehenden Ansprüche, wobei der basische Katalysator ausgewählt ist aus der Gruppe: wässriges Natriumhydroxid, alkoholisches Natriumhydroxid, festes Natriumhydroxid, wässriges Kaliumhydroxyd, alkoholisches Kaliumhydroxid, festes Kaliumhydroxid, Natrium- oder Kaliummethylat, Natrium- oder Kaliumethylat, Natrium- oder Kaliumcarbonat.

14. Verfahren nach einem der vorhergehenden Ansprüche, wobei die wässrigen Lösungen S1 und S2 ausgewählt sind aus der Gruppe: Wasser, verdünnte wässrige Natriumhydroxidlösung, Kaliumhydroxid, Natriumoder Kaliumcarbonat, verdünnte wässrige Säurelösung, recycelte wässrige Ströme, die kleine Mengen an organischen Stoffen und/oder Salzen enthalten und bevorzugt Wasser sind.

15. Verfahren nach einem der vorhergehenden Ansprüche, wobei die in Schritt T1verwendete Alkoholmasse bei 0,1 bis 0,4 und bevorzugt bei 0,13 bis 0,3 je Masseeinheit hydroxyliertes Öl liegt.

16. Verfahren nach einem der vorhergehenden Ansprüche, wobei die Masse der wässrigen Lösung S1, die verwendet wird, um das Reaktionsgemisch A zu erhalten, bei 0,01 bis 0,4 und bevorzugt bei 0,05 bis 0,2 je Masseeinheit hydroxyliertes Öl liegt.

17. Verfahren nach einem der vorhergehenden Ansprüche, wobei das hydroxylierte Öl ein hydroxyliertes Pflanzenöl ist.

18. Verfahren nach Anspruch 17, wobei das hydroxylierte Pflanzenöl Ricinusöl ist.

19. Verfahren nach Anspruch 17, wobei das hydroxylierte Pflanzenöl Lesquerrela-Öl ist.

20. Verfahren nach Anspruch 17, wobei das hydroxylierte Pflanzenöl einen Gehalt an hydroxylierten Fettsäuren von mehr als 50 Gew.-% aufweist.

21. Verfahren nach einem der vorhergehenden Ansprüche, wobei die Schritte zur Umesterung T1 und T2 in Gegenwart von Methanol durchgeführt werden.

22. Verfahren nach einem der Ansprüche 17 bis 20, wobei die Phase B1 oder C1, gegebenenfalls nach einer anschließenden Reinigung, als Biokraftstoff oder Additiv in Dieselkraftstoffen verwendet wird.

23. Verfahren nach Anspruch 18, wobei die Phase B1 ober C1, gegebenenfalls nach einem Schritt zur Reinigung, als Rohstoff für die Herstellung von 11-Aminoundecansäure verwendet wird.

## Claims

1. A process for the transesterification of a hydroxylated oil in which the transesterification is carried out in the presence of methanol or ethanol and a basic catalyst under temperature, pressure and alcohol/oil weight ratio conditions allowing a greater than 95% conversion of the hydroxylated oil to fatty acid esters in only two transesterification steps, said process comprising:
a) a first step T1 of transesterification of the hydroxylated oil, resulting in the obtaining of a reaction mixture M1;
b) a step of addition of an aqueous solution S1 so as to obtain a reaction mixture A comprising in particular hydroxylated fatty acid esters and glycerol;
c) a step of separation of the reaction mixture A by static settling and/or by centrifugal settling, making it possible to obtain a less dense phase A1 predominantly consisting of fatty esters and a denser phase A2 predominantly consisting of glycerol, water and fatty acid soaps;
d) a second transesterification step T2 in which methanol or ethanol and said basic catalyst are added to the phase A1 so as to produce a reaction mixture M2.

2. The process as claimed in claim 1, also comprising a step R of recycling a mixture comprising fatty acid esters, free fatty acids and basic catalyst to the reaction mixture M2 resulting from the second transesterification step T2 .

3. The process as claimed in either of claims 1 and 2, in which an aqueous solution S2 is added to the reaction mixture M2 or to the reaction mixture resulting from the recycling step R so as to obtain a reaction mixture B.

4. The process as claimed in any one of claims 1 to 3, also comprising a step of separation of the reaction mixture B by static settling and/or by centrifugal settling, making it possible to obtain a less dense phase B1 predominantly consisting of fatty esters and a denser phase B2 predominantly consisting of glycerol, water, and, where appropriate, fatty acid soaps.

5. The process as claimed in any one of the preceding claims, in which the steps T1, T2, R, of separation and of addition of the aqueous solutions S1 and S2 are carried out at a pressure of less than 5 bar and at a temperature ranging from 10 to 100°C, preferably from 15 to 60°C and more preferentially from 20 to 50°C.

6. The process as claimed in either of claims 4 and 5, in which the phase B1 undergoes a partial or total evaporation of the alcohol, and then addition of an aqueous solution and a phase separation, so as to obtain a less dense phase C1 consisting of fatty esters and a denser aqueous phase C2 comprising alcohol, glycerol and soaps.

7. The process as claimed in claim 6, in which the denser aqueous phase C2 recovered is used as aqueous solution S1 or S2 so as to obtain the reaction mixture A or the reaction mixture B.

8. The process as claimed in either one of claims 6 and 7, in which the denser phases A2, B2 and, optionally, C2 are mixed and the mixture undergoes a treatment comprising evaporation, acidification and settling steps resulting in the obtaining of a less dense oily phase D1 and a denser phase D2 predominantly consisting of glycerol and water.

9. The process as claimed in claim 8, in which the oily phase D1 is reacted with the alcohol and an acid catalyst chosen from the group: hydrochloric acid, sulfuric acid, methanesulfonic acid and para-toluenesulfonic acid, at a temperature ranging from 40 to 120°C, so as to obtain a mixture M3 comprising fatty acid esters and free fatty acids.

10. The process as claimed in claim 9, in which the mixture M3 is used in the recycling step R.

11. The process as claimed in claim 9, in which an acidic, basic or neutral aqueous solution, and preferably water, is added to the mixture M3 which is then subjected to a separation making it possible to obtain a denser aqueous phase E2 and a less dense phase E1 containing esters.

12. The process as claimed in claim 11, in which the phase E1 is used in the recycling step R.

13. The process as claimed in any one of the preceding claims, in which the basic catalyst is chosen from the group: aqueous sodium hydroxide, alcoholic sodium hydroxide, solid sodium hydroxide, aqueous potassium hydroxide, alcoholic potassium hydroxide, solid potassium hydroxide, sodium methoxide, potassium methoxide, sodium ethoxide, potassium ethoxide, sodium carbonate or potassium carbonate.

14. The process as claimed in any one of the preceding claims, in which the aqueous solutions S1 and S2 are chosen from the group: water, dilute aqueous solution of sodium hydroxide, potassium hydroxide, sodium carbonate or potassium carbonate, aqueous solution of dilute acid, or recycled aqueous streams which contain small amounts of organic materials and/or of salts, and are preferably water.

15. The process as claimed in any one of the preceding claims, in which the weight of alcohol used in step T1 is from 0.1 to 0.4, and preferably from 0.13 to 0.3, per unit weight of hydroxylated oil.

16. The process as claimed in any one of the preceding claims, in which the weight of aqueous solution S1 used to obtain the reaction mixture A is from 0.01 to 0.4, and preferably from 0.05 to 0.2, per unit weight of hydroxylated oil.

17. The process as claimed in any one of the preceding claims, in which the hydroxylated oil is a hydroxylated plant oil.

18. The process as claimed in claim 17, in which the hydroxylated plant oil is castor oil.

19. The process as claimed in claim 17, in which the hydroxylated plant oil is lesquerella oil.

20. The process as claimed in claim 17, in which the hydroxylated plant oil has a hydroxylated fatty acid content of greater than 50% by weight.

21. The process as claimed in any one of the preceding claims, in which the transesterification steps T1 and T2 are carried out in the presence of methanol.

22. The process as claimed in one of claims 17 to 20, in which the phase B1 or C1 is used, optionally after a subsequent purification, as a biofuel or additive in diesel fuels.

23. The process as claimed in claim 18, in which the phase B1 or C1 is used, optionally after a purification step, as a starting material for the production of 11-aminoundecanoic acid.
